# EUROPÄISCHE PATENTANMELDUNG

(11) **EP 0 864 395 A1**
(43) Veröffentlichungstag der Anmeldung: **16.09.1998**
(21) Anmeldenummer: 98250066.2
(22) Anmeldetag: 24.02.1998
(51) Int. Cl.: B23P 17/06, B23D 25/14, E04C 5/01, B21F 45/00

(54) **Verfahren und Vorrichtung zur Herstellung von Stahlfasern**

(30) Priorität: 03.03.1997 DE 19711048
(71) Anmelder: MANNESMANN Aktiengesellschaft, 40213 Düsseldorf (DE)
(72) Erfinder: Kämereit, Wilhelm, Dipl.-Ing., 40229 Dusseldorf (DE); Werner, Michael, 40227 Düsseldorf (DE); Stopca, Karl, 40231 Düsseldorf (DE); Blomtrath, Till, 40219 Düsseldorf (DE); Tiebel, Meik, 41468 Neuss (DE)
(74) Vertreter: Presting, Hans-Joachim, Dipl.-Ing.

(57) **Zusammenfassung**

Die Erfindung betrifft ein Verfahren und eine Vorrichtung zur Herstellung von Stahlfasern durch Ablängen von Teilstücken von einem drahtähnlichen Vormaterial.

Verfahrengsgemäß ist vorgesehen, daß das Vormaterial nach dem Drehverfahren als Fließspan durch Zerspanen eines Einsatzmaterials mit kreisförmigem Querschnitt erzeugt wird.

Zur Durchführung des Verfahrens wird eine Drehmaschine verwendet mit mindestens einem Paar zusammenwirkender und mit Schermessern (3) bestückter Messerscheiben(1, 2), die durch einen Motor (4) angetrieben sind und in deren Arbeitsspalt das Ablängen der Stahlfasem (11) erfolgt.

Erfindungsgemäß ist die Vorrichtung so ausgebildet, daß
- die Messerscheiben (1, 2) in unmittelbarer Nähe einer Drehmaschine angeordnet sind,
- auf dem Support der Drehmaschine eine Fangeinrichtung (7) zum Einfangen eines beim Drehen erzeugten Fließspans (8) angeordnet ist, wobei der Ausgang der Fangeinrichtung (7) für den Fließspan (8) in den Arbeitsspalt der Messerscheiben (1, 2) gerichtet ist, und
- die Drehzahl des Motors (4) entsprechend der Fließgeschwindigkeit des Fließspans (8) regelbar ist.

## Beschreibung

Die Erfindung betrifft ein Verfahren zur Herstellung von Stahlfasern gemäß dem Oberbegriff des Patentanspruchs 1 sowie eine Vorrichtung zur Durchführung dieses Verfahrens.

Zur Erhöhung der Festigkeitseigenschaften gießbarer Werkstoffe wie etwa Beton oder Kunstharze werden vielfach Armierungen aus anderen Werkstoffen in den aushärtenden Werkstoff eingebracht. Im Regelfall soll insbesondere die Zugfestigkeit des auf diese Weise gebildeten Verbundwerkstoffs erhöht werden. Allgemein üblich bei der Verarbeitung von Beton ist die Einbringung von draht- oder stabförmigem Moniereisen. Für bestimmte Anwendungsfälle (z. B. Herstellung von Fußböden für Produktionshallen oder Auskleidung eines Tunnels mit Spritzbeton) wird der Armierungswerkstoff auch in Form relativ kleinteiliger Fasern zugegeben. Diese Fasern haben beispielsweise eine Länge im Bereich von 20 bis 60 mm und eine Dicke in der Größenordnung von 0,5 bis 2 mm. Als Werkstoffe für die Fasern werden üblicherweise Stahlwerkstoffe eingesetzt. Es ist aber auch bekannt, beispielsweise Kunststoffasern zu verwenden. Wesentlich für die Qualität des gebildeten Verbundwerkstoffs ist eine wirksame Verankerung des Fasermaterials in der Matrix des Grundwerkstoffs. Da die Zugfestigkeit des Verbundwerkstoffs erhöht werden soll, ist es wichtig, daß der Widerstand gegen ein Herausziehen der Fasern aus dem Matrixwerkstoff möglichst hoch ist. Hierzu ist es beispielsweise bekannt, Stahlfasern mit einer möglichst günstigen äußeren Form zu versehen, d. h. ihnen eine von der glattzylindrischen oder prismatischen Form abweichende Gestalt zu verleihen.

Aus der DE 42 23 804 A1 ist ein Verfahren bekannt, bei dem aus einem Drahtvormaterial durch Ablängen von Teilstücken entsprechend der gewünschten Stahlfaserlänge Stahlfasern mit einer über ihre axiale Länge gewellten Form hergestellt werden. Die Wellung der Stahlfaser wird dadurch erzeugt, daß das Drahtvormaterial durch den Arbeitsspalt eines zahnradartig miteinander kämmenden Walzenpaars mit welliger Oberfläche befördert wird. Das beschriebene Verfahren sieht zusätzlich auch die Aufprägung einer Profilierung im Oberflächenbereich der Stahlfasern vor. Dies wird erreicht durch ein zusätzliches Paar von Profilierwalzen, die dem Walzenpaar mit der gewellten Oberfläche vorgeschaltet sind. Das Ablängen der einzelnen Stahlfasern findet in einem gesonderten Arbeitsgang nach dem Durchlaufen des Arbeitsspaltes des Walzenpaars mit der gewellten Oberfläche statt.

Aus der DE 34 35 850 A1 ist ein ähnliches Verfahren zur Herstellung von Stahlfasern bekannt, bei dem als Vormaterial ein schmales Stahlband anstelle eines Drahtes eingesetzt und bei dem ebenfalls durch ein Paar miteinander kämmender Walzen bzw. Zahnräder eine in Längsrichtung wellige Struktur erzeugt wird. Hierbei findet das Ablängen der einzelnen Stahlfasern in einem Arbeitsgang mit der Erzeugung der gewellten Struktur statt, da das Zahnradpaar über den Umfang mit Messern bestückt ist, deren Abstand zueinander der gewünschten Faserlänge entspricht.

In den beiden bekannten Verfahren weist das eingesetzte Vormaterial jeweils einen Querschnitt auf, der dem Querschnitt der zu erzeugenden Stahlfasern von vornherein entspricht. Es ist aber auch bekannt, Stahlfasern aus einem Vormaterial herzustellen, das in seinen Abmessungen in keiner Weise mit den Abmessungen der herzustellenden Stahlfasern korreliert. In diesem Zusammenhang ist auf die DE 195 31 826 zu verweisen. In dieser Schrift wird ein Verfahren zur Stahlfaserherstellung offenbart, bei dem aus einem Vormaterial mit rotationssymmetrischem Querschnitt, das sich um seine Längsachse dreht, mittels eines rotierenden Fräswerkzeug durch Zerspanen des Vormaterials Stahlfasern mit der gewünschten Länge erzeugt werden. Diese Fasern weisen eine im wesentlichen lineare Form auf. Die Erzeugung von Stahlfasern mit in Längsrichtung wellenförmiger Ausbildung ist dabei nicht möglich.

Aufgabe der vorliegenden Erfindung ist es, einen neuen Weg zur Herstellung von Stahlfasern vorzuschlagen, bei dem auch die Erzeugung gewellter Stahlfasern möglich ist.

Gelöst wird diese Aufgabe bei einem Verfahren mit den Merkmalen des Oberbegriffs des Patentanspruchs 1 dadurch, daß das Vormaterial als Fließspan durch Zerspanen eines Einsatzmaterials mit kreisförmigem Querschnitt nach dem Drehverfahren erzeugt wird. Dies setzt selbstverständlich voraus, daß als Einsatzmaterial ein Stahlwerkstoff verwendet wird, der eine sichere Ausbildung von Fließspänen zuläßt. Beispielsweise können hierfür Baustähle höherer Festigkeit wie etwa der Stahl St 52.4 eingesetzt werden. Durch Zerspanung nach dem Drehverfahren lässt sich dann ohne weiteres ein praktisch endloser Fließspan mit den für die zu erzeugenden Stahlfasern gewünschten Querschnittsabmessungen herstellen. Überaschenderweise war es ohne größere Probleme möglich, den erzeugten dünnen Fließspan einzufangen und unmittelbar danach auf die gewünschte Faserlänge zu zerteilen. Es empfiehlt sich daher, den Fließspan nicht aufzucoilen, sondern das Ablängen unmittelbar hinter dem Zerspanen in einer gemeinsamen Produktionseinheit stattfinden zu lassen. Vorzugsweise erfolgt das Ablängen durch Schneiden mittels paarweise zusammenwirkender Messerscheiben, die am Umfang Schermesser aufweisen, deren Abstand entsprechend der gewünschten Faserlänge gewählt ist. Um Stahlfasern erzeugen zu können, deren Form in Längsrichtung von der Stabform abweicht, die also insbesondere wellenförmig gebogen sind, können die für das Ablängen benutzten Messerscheiben an ihrem Umfang mit entsprechenden ineinandergreifenden Verzahnungen versehen werden. Es ist selbstverständlich auch möglich, das Ablängen und das Biegen in separaten Arbeitsschritten vorzunehmen. Es hat sich als zweckmäßig erwiesen, die Abweichung der Form der Stahlfasern von der Stabform jeweils auf lediglich die Enden der einzelnen Stahlfasern zu beschränken. Dabei kann es besonders vorteilhaft sein, diese Formabweichung in Längsrichtung der Stahlfasern ungleichmäßig auszubilden. Bei gewellten Faserenden ist eine zum Ende hin jeweils abnehmende "Auslenkung" der einzelnen Wellen (also eine abnehmende Wellenamplitude) günstig.

Eine erfindungsgemäße Vorrichtung zur Durchführung des Verfahrens beinhaltet eine Drehmaschine und weist mindestens ein Paar zusammenwirkender mit Schermessern bestückter Messerscheiben auf, die durch einen Motor angetrieben werden und in deren Arbeitsspalt das Ablängen der Stahlfasern erfolgt. Die Messerscheiben sind in unmittelbarer Nähe einer Drehmaschine angeordnet, auf der der Fließspan erzeugt wird. Auf dem Support der Drehmaschine wird erfindungsgemäß eine Fangeinrichtung zum Einfangen des beim Drehen erzeugten Fließspans angeordnet, wobei der Ausgang der Fangeinrichtung auf den Arbeitsspalt der Messerscheiben gerichtet ist. Wesentlich ist, daß die Drehzahl des Motors für den Antrieb der Messerscheiben entsprechend der Fließgeschwindigkeit des Fließspans regelbar ist. In diesem Zusammenhang kann natürlich auch die Drehzahl bzw. Schnittgeschwindigkeit der Drehmaschine, die mit der Geschwindigkeit des sich ständig verlängernden Fließspans korrelieren, als Regelgröße herangezogen werden. Es empfiehlt sich, das Teilaggregat der angetriebenen Messerscheiben auf dem Support der Drehmaschine anzuordnen. Dadurch kann die räumliche Zuordnung zwischen dem Drehmeißel, der den Fließspan erzeugt, der Fangeinrichtung für den Fließspan und der Ablängeinrichtung völlig konstant gehalten werden. Alternativ ist es aber beispielsweise auch möglich, dieses Teilaggregat neben der Drehmaschine aufzustellen. In diesem Fall empfiehlt es sich, die Fangeinrichtung, die generell in lediglich einem kurzem rohrförmigen Körper bestehen kann, als flexiblen Schlauch auszuführen, der entsprechend biegsam ist und der Bewegung des Supports der Drehmaschine relativ zum Teilaggregat ohne Probleme folgen kann. Im Grundsatz könnte die Einstellung der Motordrehzahl für den Antrieb der Messerscheiben im Sinne einer reinen Steuerung aufgrund der Drehzahl der Drehmaschine und der gegebenen aktuellen geometrischen Abmessungen des Vormaterials bestimmt werden. Es empfiehlt sich jedoch hierzu eine Regelung vozusehen, bei der die Führungsgröße zur Regelung der Motordrehzahl durch einen an der Fangeinrichtung angeordneten Sensor ermittelt wird. Hierzu kann beispielsweise ein Taster mit einem durch den Fließspan angetriebenen Meßrad verwendet werden. Als besonders einfach hat es sich jedoch herausgestellt, lediglich die Zugkraft zu erfassen, die auf den Fließspan einwirkt. Zur Erzeugung einer gewellten Faserform empfiehlt es sich, die Messerscheiben an ihrem Umfang zwischen den Schermessern mit Verzahnungsabschnitten zu versehen. Wenn dabei die Verzahnungsabschnitte jeweils nur im Nahbereich der Schermesser angeordnet sind und der Abstand zwischen zwei unmittelbar benachbarten Verzahnungsabschnitten, zwischen denen kein Schermesser liegt, deutlich größer ist als die Länge dieser beiden Verzahnungsabschnitte, lassen sich die vorteilhaften Stahlfasern mit lediglich an den Enden gewellter Form herstellen. Durch ungleichmäßige Ausführung der Verzahnungen (Höhe und Dicke der Zähne) an den paarweise zusammenwirkenden Messerscheiben läßt sich eine entsprechende Ungleichmäßigkeit der Form der Stahlfasern erzielen.

Anhand der in den Figuren dargestellten Ausführungsbeispiele wird die Erfindung nachfolgend näher erläutert. Es zeigen:
- Fig. 1: das Schema einer erfindungsgemäßen Vorrichtung in Draufsicht,
- Fig.2: das Schema einer erfindungsgemäßen Anlage mit mehreren Zerspanungseinrichtungen in Draufsicht,
- Fig. 3: eine variierte Ausführung der erfindungsgemäßen Anlage mit mehreren Zerspanungseinrichtungen in Vorderansicht und
- Fig. 4: drei unterschiedlich ausgeführte Stahlfasern nach dem erfindungsgemäßen Verfahren.

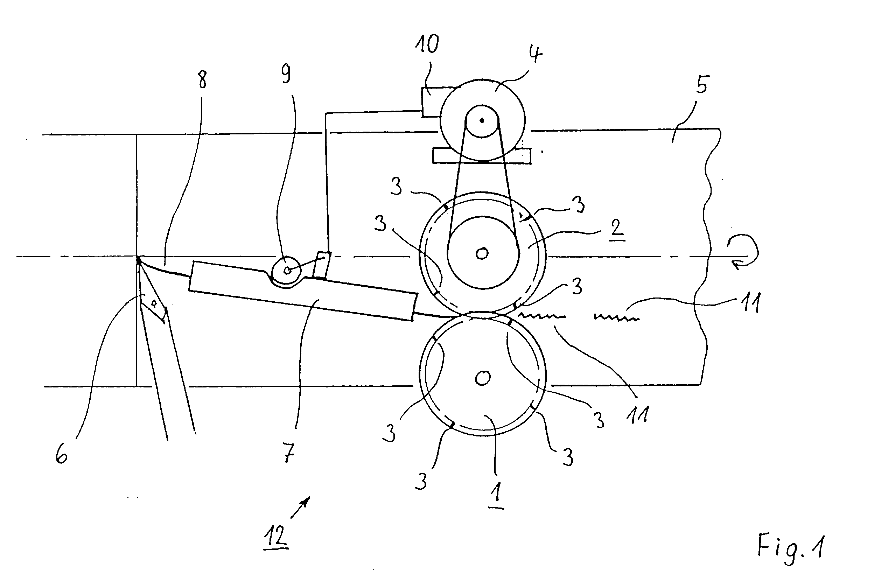

In Fig. 1 ist das Schema einer erfindungsgemäßen Anlage in sehr vereinfachter Form dargestellt worden. Von der Drehmaschine selbst sind mit Ausnahme eines Drehmeißels 6 keine weiteren Einzelheiten wiedergegeben. Das für die Erzeugung des Fließspans eingesetzte Vormaterial mit rotationssymmetrischem Querschnitt ist mit dem Bezugszeichen 5 bezeichnet. Auf dem nicht dargestellten Support der Drehmaschine ist eine Fangeinrichtung 7 befestigt, deren Eingang in der Nähe der Schneide des Drehmeißels 6 liegt und die im wesentlichen als rohrförmiger Körper ausgebildet ist. Durch eine entsprechende Schneidengeometrie des Drehmeißels 6 kann problemlos gewährleistet werden, daß bei Aufnahme des Zerspanungsprozesses der neu entstehende Fließspan 8 sicher in die Eingangsöffnung der Fangeinrichtung 7 gelangt. Der Ausgang der Fangeinrichtung 7 endet in unmittelbarer Nähe des Arbeitsspaltes eines Paares von Messerscheiben (1,2). Genauer gesagt, ist der Ausgang der Fangeinrichtung 7 auf den Arbeitsspalt der Messerscheiben (1,2) gerichtet, die drehbar ebenfalls auf dem nicht dargestellten Support der Drehmaschine gelagert sind. An ihrem Umfang sind in vorgegebenen Abständen jeweils Schermesser 3 angeordnet, die beim Drehen der Messerscheiben 1,2 jeweils im Sinne einer Schneidvorrichtung zusammenwirken. Im vorliegenden Fall wird die Messerscheibe 2 mittels eines Riemen- oder Kettentriebs von einem vorzugsweise elektrischen Motor 4 angetrieben. Entsprechend einer zweckmäßigen Weiterbildung der Erfindung weisen die beiden Messerscheiben nicht nur die am Umfang verteilten Schermesser 3 auf, sondern sind am Umfang auch mit einer zahnradähnlichen Profilierung versehen. Durch das Ineinandergreifen der Verzahnungen wird daher auch die Messerscheibe 1 mittelbar angetrieben. Es ist jedoch auch ohne weiteres möglich, durch ein entsprechend zwischengeschaltetes Getriebe einen gleichmäßigen Gegenlauf der beiden Messerscheiben 1,2 zu gewährleisten, wenn diese sich nicht unmittelbar am Umfang berühren. Um die Drehzahl des Motors 4 auf die Fließgeschwindigkeit des Fließspans 8 abstimmen zu können, ist ein Sensor 9 vorgesehen, der im vorliegenden Fall unmittelbar an der Fangeinrichtung 7 angeordnet ist und einen rädchenförmigen. Taster aufweist. Damit kann beispielsweise der Zug bestimmt werden, der auf dem Fließspan lastet. Die Meßgröße des Sensors 9 wird über eine elektrische Leitung an einen Drehzahlregler 10 gegeben, der den Motor 4 beeinflußt. Das im wesentlichen aus den Baueinheiten Fangeinheit 7, Messerscheiben 1,2 und Motor 4 bestehende Teilaggregat ist in Fig. 1 mit dem Bezugszeichen 12 bezeichnet.

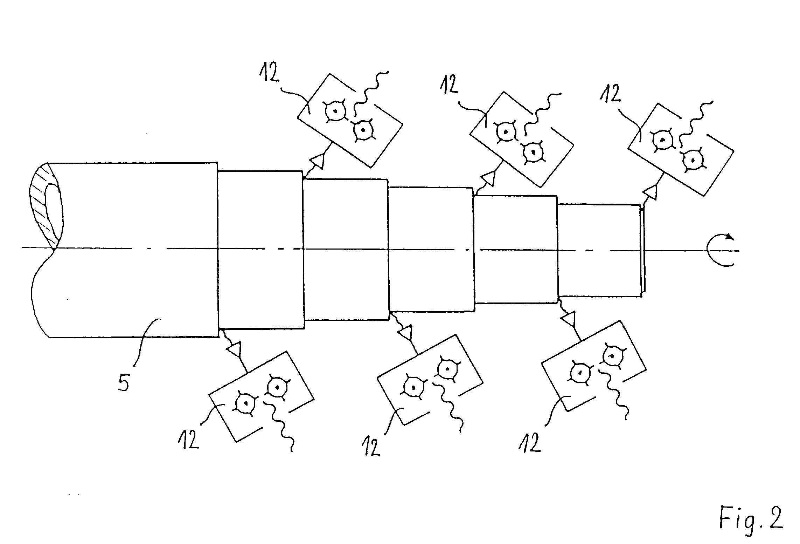

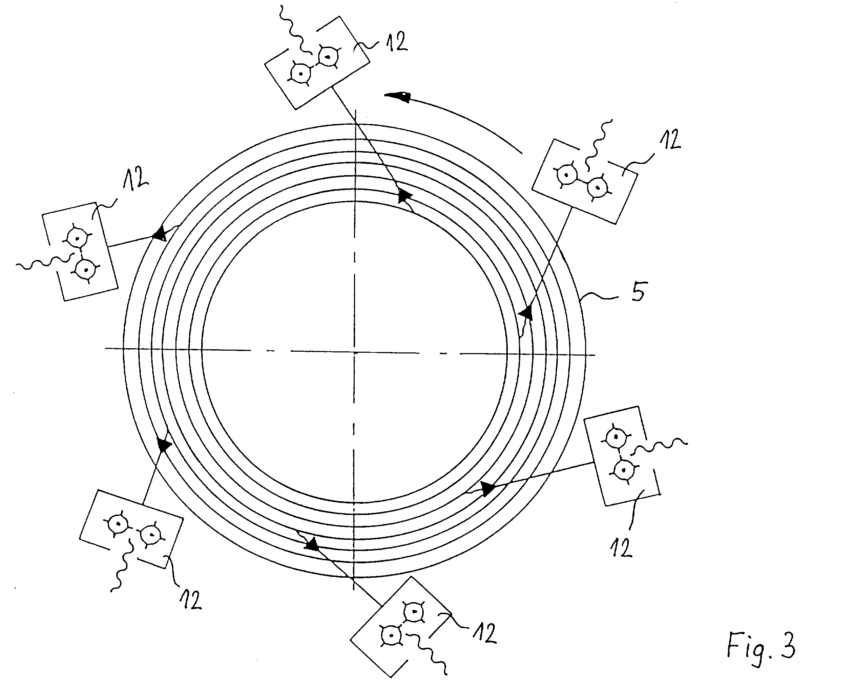

Die Fig.2 gibt eine Draufsicht auf eine erfindungsgemäße Anlage wieder, die wiederum sehr schematisch dargestellt ist. Sie unterscheidet sich von der Darstellung in Fig. 1 im wesentlichen nur dadurch, daß anstelle eines einzelnen Teilaggregats 12 in diesem Fall insgesamt 6 Teilaggregate 12 vorgesehen sind, so daß die 6-fache Zerspanungsleistung und damit Produktionskapazität zur Stahlfasererzeugung bereitgestellt wird. Die Teilaggregate 12 sind jeweils zur Hälfte auf gegenüberliegenden Seiten des zu zerspanenden Vormaterials 5 in zueinander versetzter Form angeordnet. Eine etwas andere Anordnung mit ebenfalls 6 Teilaggregaten 12 ergibt sich aus der schematischen Darstellung der Fig.3, in der die Teilaggregate 12 in gleichmäßig um den Umfang des zu zerspanenden Vormaterials 5 gruppiert sind. Bei Einsatz mehrerer Teilaggregate 12, die gleichzeitig zur Zerspanung desselben Stücks des Vormaterials 5 arbeiten, kann es vielfach ausreichen, einen einzigen gemeinsamen Sensor 9 zur Regelung mehrerer Motoren 4 vorzusehen, da an die Genauigkeit der Regelung keine sehr hohen Anforderungen gestellt werden.

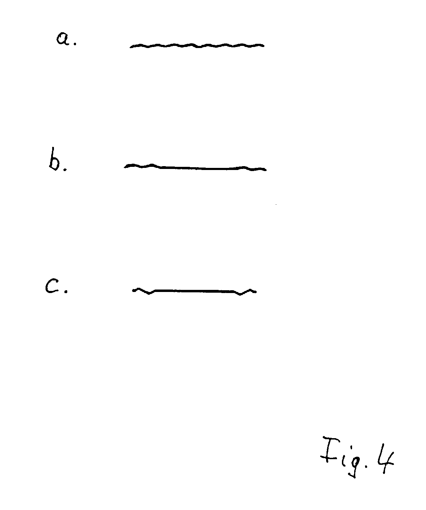

In Fig. 4 sind in den Teilfiguren a bis c drei Beispiele für unterschiedliche Stahlfaserformen dargestellt, die durch das erfindungsgemäße Verfahren und die erfindungsgemäße Vorrichtung herstellbar sind. Die Fig. 4a zeigt eine Stahlfaser, die von der Stabform dadurch abweicht, daß sie über ihre gesamte axiale Länge gewellt, und zwar gleichmäßig gewellt ausgeführt ist. Die Stahlfaser der Fig. 4b ist lediglich in den Endbereichen gleichmäßig gewellt und im Mittelbereich stabförmig. In Vergleich hierzu handelt es sich in Fig. 4c um eine Stahlfaser mit in den Endbereichen ungleichmäßiger Wellung

Wenn in der Beschreibung der Erfindung von einer Drehmaschine mit Support, d.h. mit einem Werkzeugträger, gesprochen wird, so bedeutet dies nicht, daß dieser Support, wie dies allgemein üblich ist, in Längs- und Querrichtung zum zu zerspanenden Vormaterial 5 verschieblich angeordnet sein muß. Es kann selbstverständlich auch vorgesehen sein, daß der das Spannwerkzeug für das Vormaterial 5 tragende Teil der Drehmaschine in einer oder in beiden genannten Richtungen zur Realisierung der erforderlichen Vorschubbewegung beweglich ist.

### Ausführungsbeispiel:

Ein Stahlrohr der Güte St 52.4 von 168,3 mm Durchmesser und 20 mm Wanddicke wurde auf einer Drehmaschine mit einer Drehzahl von 120 U/min zerspant. Die Spantiefe war auf 0,70 mm und die Spanbreite auf 0,625 mm eingestellt. Beim Zerspanen entstand ein sehr fester Fließspan, der in eine erfindungsgemäße Ablängeinrichtung gegeben wurde, deren Messerwalzen eine zahnradähnliche Profilierung am Umfang aufwies, so daß die auf eine Länge von etwa 30 mm abgeschnittenen Stahlfasern wie in Fig. 4a jeweils etwa 7 Wellenberge und -täler aufwiesen. Im gestreckten Zustand betrug die Länge der gewellten Fasern etwa 32 mm. Die so erzeugten Stahlfasern wiesen nicht nur eine sehr hohe Zugfestigkeit auf, sondern zeigten eine außerordentlich wirksame Verankerung im Matrixwerkstoff bei ihrer Verarbeitung zu Faserbeton.

## Patentansprüche

1. Verfahren zur Herstellung von Stahlfasern durch Ablängen von Teilstücken von einem drahtähnlichen Vormaterial, wobei die Stahlfasern zur Verstärkung gießbarer aushärtender Werkstoffe, insbesondere Beton, vorgesehen sind und eine Dicke im Bereich von etwa 0,3 bis 2,5 mm sowie eine Länge im Bereich des 20- bis 70-Fachen der Dicke aufweisen
dadurch gekennzeichnet,
daß das Vormaterial nach dem Drehverfahren als Fließspan durch Zerspanen eines Einsatzmaterials mit kreisförmigem Querschnitt erzeugt wird.

2. Verfahren nach Anspruch 1,
dadurch gekennzeichnet,
daß das Zerspanen und das Ablängen unmittelbar hintereinander in einer gemeinsamen Produktionseinheit stattfindet.

3. Verfahren nach einem der Ansprüche 1 bis 2,
dadurch gekennzeichnet,
daß das Ablängen durch Schneiden mittels paarweise zusammenwirkender Messerscheiben mit entsprechend der gewünschten Faserlänge am Umfang verteilten Schermessern erfolgt.

4. Verfahren nach Anspruch 3,
dadurch gekennzeichnet,
daß die Stahlfasern während des Ablängvorgangs durch ineinandergreifende Verzahnungen am Umfang der Messerscheiben in eine von der Stabform abweichende Form, insbesondere in eine gewellte Form gebogen werden.

5. Verfahren nach Anspruch 4,
dadurch gekennzeichnet,
daß die von der Stabform abweichende Form der Stahlfasern jeweils auf Bereiche an den Enden der Stahlfasern beschränkt wird.

6. Verfahren nach einem der Ansprüche 4 bis 5,
dadurch gekennzeichnet,
daß die abweichende Form entlang der Längserstreckung der Stahlfasern jeweils ungleichmäßig ausgebildet ist.

7. Vorrichtung zur Durchführung des Verfahrens nach Anspruch 1, mit einer Drehmaschine und mit mindestens einem Paar zusammenwirkender und mit Schermessern (3) bestückter Messerscheiben (1,2), die durch einen Motor (4) angetrieben sind und in deren Arbeitsspalt das Ablängen der Stahlfasern (11) erfolgt,
dadurch gekennzeichnet,
- daß die Messerscheiben (1,2) in unmittelbarer Nähe einer Drehmaschine angeordnet sind,
- daß auf dem Support der Drehmaschine eine Fangeinrichtung (7) zum Einfangen eines beim Drehen erzeugten Fließspans (8) angeordnet ist, wobei der Ausgang der Fangeinrichtung (7) für den Fließspan (8) in den Arbeitspalt der Messerscheiben (1,2) gerichtet ist, und
- daß die Drehzahl des Motors (4) entsprechend der Fließgeschwindigkeit des Fließspans (8) regelbar ist,

8. Vorrichtung nach Anspruch 7,
dadurch gekennzeichnet,
daß die Messerscheiben (1,2) auf dem Support der Drehmaschine angeordnet sind.

9. Vorrichtung nach einem der Ansprüche 7 bis 8,
dadurch gekennzeichnet,
daß die Fangeinrichtung (7) als rohrförmiger Körper ausgebildet ist.

10. Vorrichtung nach Anspruch 9,
dadurch gekennzeichnet,
daß der rohrförmige Körper im Sinne eines Schlauchs flexibel biegbar ist.

11. Vorrichtung nach einem der Ansprüche 7 bis 9,
dadurch gekennzeichnet,
daß die Stellgröße zur Regelung der Motordrehzahl durch einen an der Fangeinrichtung (7) angeordneten Sensor (9) ermittelbar ist.

12. Vorrichtung nach Anspruch 10,
dadurch gekennzeichnet,
daß der Sensor (9) auf die Erfassung der Zugspannung des Fließspans (8) eingerichtet ist.

13. Vorrichtung nach einem der Ansprüche 7 bis 12,
dadurch gekennzeichnet,
daß die Messerscheiben (1,2) an ihrem Umfang zwischen den Schermessern (3) Verzahnungsabschnitte zur Erzeugung einer gewünschten gewellten Faserform aufweisen.

14. Vorrichtung nach Anspruch 13,
dadurch gekennzeichnet,
daß die Verzahnungsabschnitte jeweils im Nahbereich der Schermesser (3) angeordnet sind und zwischen zwei unmittelbar benachbarten Verzahnungsabschnitten, zwischen denen kein Schermesser (3) liegt, ein Abstand am Umfang besteht, der deutlich größer ist als die Länge der beiden Verzahnungsabschnitte.

15. Vorrichtung nach einem der Ansprüche 13 bis 14,
dadurch gekennzeichnet,
daß die Verzahnung in den Verzahnungsabschnitten an den paarweise zusammenwirkenden Messerscheiben (1, 2) jeweils ungleichmäßig ausgeführt ist.
